## Europäisches Patentamt

## European Patent Office

## Office européen des brevets

(19)

(11) Numéro de publication : **0 022 702**
**B1**

(12) **FASCICULE DE BREVET EUROPÉEN**

(45) Date de publication du fascicule du brevet :
13.10.82

(51) Int. Cl.³ : **B 60 R   5/00**

(21) Numéro de dépôt : 80400987.6

(22) Date de dépôt : 30.06.80

(54) **Bac protecteur destiné à être introduit dans le coffre de voitures de tourisme.**

(30) Priorité : 12.07.79 FR 7918140

(43) Date de publication de la demande :
21.01.81 (Bulletin 81/03)

(45) Mention de la délivrance du brevet :
13.10.82 Bulletin 82/41

(84) Etats contractants désignés :
BE GB IT LU NL

(56) Documents cités :
DE A 21 637 25
DE A 26 334 67
DE A 27 051 15
DE A 27 411 11
DE A 28 159 42
DE B 12 794 89
FR A 22 213 24

(73) Titulaire : **Lahaye, Christian Jean-Pierre René**
**8, rue Sainte Geneviève**
**F-50700 Valognes Manche (FR)**

(72) Inventeur : **Lahaye, Christian Jean-Pierre René**
**8, rue Sainte Geneviève**
**F-50700 Valognes Manche (FR)**

(74) Mandataire : **Madeuf, Claude Alexandre Jean et al**
**CABINET MADEUF 3, avenue Bugeaud**
**F-75116 Paris (FR)**

Imprimerie Jouve, 18, rue St-Denis, 75001 Paris, France

Bac protecteur destiné à être introduit dans le coffre de voitures de tourisme

Le coffre d'une voiture de tourisme est très souvent souillé par les objets et produits transportés car la voiture est utilisée en fin de semaine pour aller à la pêche ou à la chasse et, pendant la semaine, pour transporter des produits ou objets professionnels, en particulier lorsque le propriétaire du véhicule est commerçant ou artisan. En outre, le grand nombre de chiens, chats et autres animaux domestiques fait qu'en fin de semaine ces animaux sont transportés dans les coffres qui se trouvent en conséquence très souvent souillés. Le nettoyage de ces coffres est extrêmement difficile et fréquemment on se trouve amené à changer les tapis ou revêtements intérieurs, mais on s'aperçoit aussi alors que la tôlerie du véhicule est atteinte et l'on se trouve dans l'obligation de faire effectuer des réparations très importantes.

La présente invention remédie à ces inconvénients en créant un bac de protection réalisé en une matière suffisamment souple, légère et résistante dont la forme épouse, au plus juste, la forme du coffre de la voiture de tourisme considéré et qui peut se placer et se retirer facilement sans aménagement spécial du coffre ni intervention particulière, ce bac pouvant être rapidement retiré pour être nettoyé et, comme il est imperméable et imputrescible, l'intérieur de coffre n'est jamais souillé.

Ce bac est particulièrement intéressant lorsque l'on doit transporter dans le coffre de la voiture des objets sales, humides, souillés par exemple du poisson, des équipements de plongée sous-marine, etc., ou des animaux tels que chiens et chats, vêtements de chasseurs, gibier ou même les produits du marché à partir d'une grande surface et, enfin, des objets ou produits transportés pour le travail pendant la semaine soit par un commerçant, soit par un artisan.

On connaît déjà en particulier du fait du brevet DE-A-2 633 467 un bac protecteur réalisé à partir d'une feuille en matière plastique destinée à être placé dans la malle d'un véhicule automobile dont le fond est bordé par une paroi verticale périphérique se terminant à sa partie supérieure totalement ou partiellement par un bourrelet gonflable mais la réalisation de ce bac est imparfaite et n'assure pas une protection complète et sûre du fond et des parois latérales du coffre d'un véhicule automobile.

Conformément à l'invention le bac protecteur destiné à revêtir les parois latérales et le fond d'un coffre de véhicule est réalisé en une matière plastique imputrescible et imperméable suffisamment souple pour être pliée, ce bac protecteur comportant un fond délimité extérieurement par un bord sensiblement vertical formant le pourtour du bac avec à sa partie supérieure, quand la configuration du coffre le permet, un léger arrondi, ce rebord arrondi pouvant être constitué par un bourrelet gonflable, caractérisé en ce qu'afin de permettre la pose et la dépose du bac dans le coffre et d'éviter de faire glisser des éléments solides ou liquides introduits dans le bac, entre la paroi extérieure du bac et la paroi intérieure du coffre, il est prévu à la partie inférieure du bord sensiblement vertical adjacent au fond du bac un bourrelet gonflable épousant au plus juste, la forme du coffre de la voiture et assurant ainsi la protection parfaite du coffre tout en permettant le repliement aisé du bac protecteur lorsqu'il n'est pas utilisé.

Diverses autres caractéristiques de l'invention ressortent d'ailleurs de la description détaillée qui suit. Une forme de réalisation de l'objet de l'invention est représentée, à titre d'exemple, au dessin annexé.

La figure 1 est une vue en plan du bac de protection conformément à l'invention.

La figure 2 est une coupe suivant la ligne II-II de la figure 1.

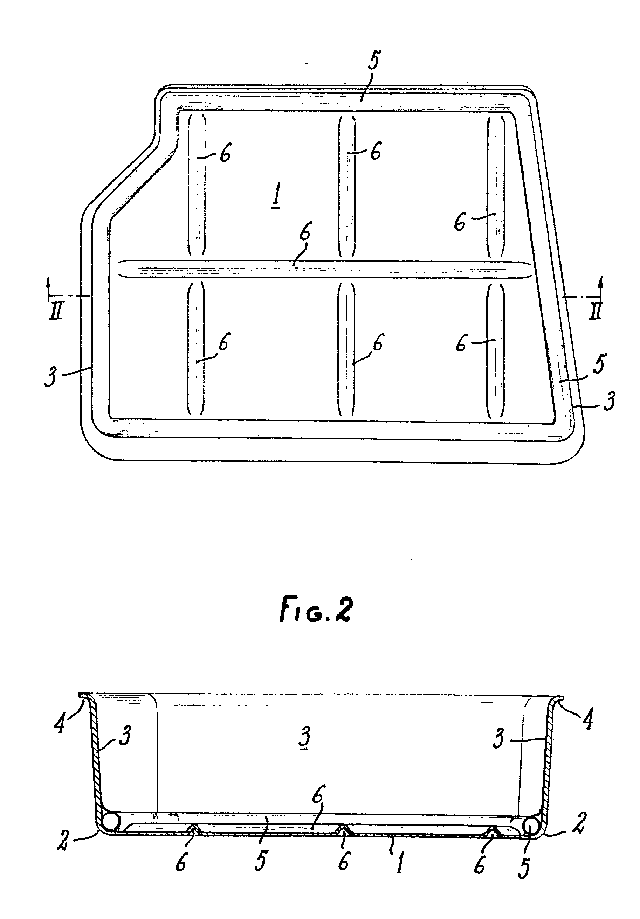

Comme on le voit tant à la figure 1 qu'à la figure 2, le bac est constitué par un fond 1 ayant, en plan, sensiblement la forme du coffre du véhicule considéré, ce fond 1 qui est réalisé en une matière très souple imputrescible et imperméable, étant prolongé, sur son pourtour, par un arrondi 2 faisant la liaison du fond avec le bord sensiblement vertical 3 formant le pourtour du bac. Ce bord vertical 3 se termine par une zone 4 arrondie vers l'extérieur facilitant la manœuvre de pose et de dépose du bac ainsi que sa préhension et, en outre, évitant tout glissement de matières salissantes entre le bac et la paroi intérieure du coffre du véhicule. Bien entendu le bord vertical 3 est réalisé dans la même matière que le fond 1.

De plus, il est prévu sur la périphérie intérieure du bac solidaire du fond 1 et du bord sensiblement vertical 3, un bourrelet 5 gonflable par exemple à l'aide d'une pompe à bicyclette ce qui permet au bac d'épouser d'une manière parfaite et certaine la forme intérieure du coffre du véhicule automobile. De ce fait on peut employer un fond 1 extrêmement mince et souple qui est correctement tendu par le boudin gonflable 5 lorsque celui-ci est gonflé. Cette forme de réalisation permet de replier le bac comme il a été dit plus haut, lorsqu'il n'est pas en utilisation dans le coffre du véhicule considéré.

Bien entendu suivant les types de coffres, le bac sera réalisé de façon à épouser, au plus juste, la forme de ce coffre. La fabrication est faite à partir d'outillages et de moules permettant la réalisation soit par thermo-formage au contact, soit par rotomoulage, soit parfois même par emboutissage à chaud de plaques ou de feuilles de matière plastique naturelle ou synthétique considérées. En général, on utilisera le plus souvent du polyester, du polyéthylène, des produits du type ABS, etc., qui sont légers, inaltérables et lavables.

Dans certains cas le fond 1 est raidi par des ondulations ou des moulages 6 tandis que les parois latérales peuvent également être raidies par différents moyens tels qu'ondulations et autres.

Il va sans dire que lorsque les coffres de véhicules sont équipés de ces bacs qui doivent se placer et se retirer de chaque coffre sans effort et sans outil, on peut transporter toutes sortes de produits qui, normalement, ne peuvent pas l'être du fait soit de l'humidité, soit des salissures, par exemple du matériel de pêche, et en particulier du matériel pour la mer, pour la chasse, ou même du gibier ou des animaux vivants. De même, ce bac peut être fréquemment employé pour effectuer un déplacement dans une grande surface afin d'acheter des produits lourds et peu maniables ou même transporter des produits divers pour son jardin personnel.

## Revendication

Bac protecteur destiné à revêtir les parois latérales et le fond d'un coffre de véhicule réalisé en une matière plastique imputrescible et imperméable suffisamment souple pour être pliée, ce bac protecteur comportant un fond (1) délimité extérieurement par un bord sensiblement vertical (3) formant le pourtour du bac avec à sa partie supérieure, quand la configuration du coffre le permet, un léger arrondi (4), ce rebord arrondi pouvant être constitué par un bourrelet gonflable, caractérisé en ce qu'afin de permettre la pose et la dépose du bac dans le coffre et d'éviter de faire glisser des éléments solides ou liquides introduits dans le bac, entre la paroi extérieure du bac et la paroi intérieure du coffre, il est prévu à la partie inférieure du bord (3) adjacent au fond (1) du bac un bourrelet gonflable (5) épousant au plus juste, la forme du coffre de la voiture et assurant ainsi la protection parfaite du coffre.

## Claim

Protecting tray for lining the side walls and bottom of a vehicle boot made of an imputrescible and impervious material having a sufficient flexibility to be bent, this protecting tray comprising a bottom (1) outerly limited by a substantially vertical edge (3) forming the periphery of the tray with, when the shape of the boot permits it, a slight round shape (4), this round shaped flange being possibly made by an inflating pad, characterized in that, in order to enable putting and removing the tray in the boot and to obviate sliding solid or liquid products introduced in the tray, between the outer wall of the tray and the inner wall of the boot, it is provided, at the lower part of the edge (3) adjacent the bottom (1) of the tray, an inflating pad (5) fitting closely the shape of the car boot and ensuring thereby the perfect protection of the boot.

## Anspruch

Schutzwanne zum Abdecken der Seitenwände und des Bodens eines Kofferraumes von Fahrzeugen, welche aus einem chemisch widerstandsfähigen, flüssigkeitsundurchlässigen aber ausreichend geschmeidigen, ein Zusammenfalten erlaubenden, Kunststoff hergestellt ist, die Schutzwanne besteht aus einem Boden (1) an den seitlich, wesentlich vertikale Seitwände (3) angrenzen, die die äussere Form der Wanne bestimmen und die, wenn es die Form des Kofferraumes erlaubt, einen oberen leicht abgerundeten Rand (4) aufweisen, dieser obere Rand kann aus einem aufblasbaren Wulst bestehen, dadurch gekennzeichnet, dass zum Einsetzen der Wanne in den Kofferraum und zur ihrer Entfernung aus dem Kofferraum sowie um ein Gleiten von festen oder flüssigen in die Wanne eingebrachten Gegenstände zu verhindern, ein aufblasbarer Wulst (5), der so genau wie möglich die Formen des Kofferaumes annimmt und diesen folglich vollständig schützt, am oberen Teil des an den Boden (1) angrenzenden Randes (3) vorgesehen ist.

5

6

6

1

6

6

6

II

II

3

6

6

6

5

3

**FIG. 2**

4

3

3

4

2

6

2

6

5

6

1

6

5

1